(19) Europäisches Patentamt
European Patent Office
Office européen des brevets

(11) **EP 3 040 136 B1**

(12) **EUROPEAN PATENT SPECIFICATION**

(45) Date of publication and mention
of the grant of the patent:
**07.04.2021 Bulletin 2021/14**

(21) Application number: **14839924.9**

(22) Date of filing: **25.08.2014**

(51) Int Cl.:
**B22C 9/02** *(2006.01)*        **B22C 1/00** *(2006.01)*
**B22C 1/10** *(2006.01)*        **B22C 1/18** *(2006.01)*
**B22C 1/22** *(2006.01)*        **B22C 9/12** *(2006.01)*

(86) International application number:
**PCT/JP2014/072125**

(87) International publication number:
**WO 2015/029935 (05.03.2015 Gazette 2015/09)**

(54) **MOLDING METHOD FOR LAMINATED MOLD**

FORMVERFAHREN FÜR LAMINIERTE FORM

PROCÉDÉ DE MOULAGE POUR MOULE STRATIFIÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.08.2013 JP 2013180314**

(43) Date of publication of application:
**06.07.2016 Bulletin 2016/27**

(73) Proprietor: **ASAHI YUKIZAI CORPORATION
Nobeoka-shi, Miyazaki (JP)**

(72) Inventor: **TANAKA, Yuichiro
Niwa-gun
Aichi 480-0105 (JP)**

(74) Representative: **Mewburn Ellis LLP
Aurora Building
Counterslip
Bristol BS1 6BX (GB)**

(56) References cited:
**WO-A1-02/26419         WO-A1-2007/077731
WO-A2-2004/112988       JP-A- H08 509 666
JP-A- H09 141 386       JP-A- 2000 024 756
JP-A- 2002 301 543      JP-A- 2004 508 941
JP-A- 2006 255 782      JP-B2- 3 147 744**

**Description**

TECHNICAL FIELD

The present invention relates to a method of forming a laminar casting mold, and more particularly relates to a method of forming a sand mold having an intended configuration by repeating steps of forming a thin layer of sand and curing the formed sand layer in the form of a predetermined shape, thereby obtaining the sand mold as a one-piece body consisting of a plurality of the cured sand layers superposed on each other.

BACKGROUND ART

As a method of forming a casting mold by superposing a plurality of sand layers on each other, there has been proposed a method of forming a sand mold by a laminating process as shown in Fig. 8, for example (see Patent Document 1). This method includes a sand-layer-forming step in which a thin layer of sand is formed by scattering a resin coated sand, and a curing step in which a predetermined part of the thus formed thin layer of sand is cured by irradiating the above-described part with a laser beam. A layer of the sand mold is formed by the above-described steps. By repeating the above-described steps, cured sand layers corresponding to respective horizontal-cross-sectional shapes of the intended sand mold are successively superposed on each other, whereby the sand mold is obtained as a three-dimensional formed article of sand. In the sand-layer-forming step described above, the first layer is formed on a preformed base so that the first layer closely adheres to the base. In this respect, it is noted that the conventional sand layer formed by curing a shell sand by irradiation with the laser beam generally has an extremely small thickness of about 0.1-0.5mm, so that the sand layer often warps due to contraction of a resin existing among sand grains. However, the above-described method makes it possible to prevent the cured sand layers corresponding to the respective horizontal-cross-sectional shapes of the intended sand mold, from warping during their formation, by forming the first sand layer on the preformed base so that the first sand layer closely adheres to the base.

As another conventional method of forming the casting mold by superposing the plurality of sand layers on each other, there has been proposed a multilayer molding method for forming a sand mold as shown in Fig. 9 (see Patent Document 2). This method includes a laminating step in which sand is laminated in the form of a thin layer, a mask-disposing step in which a preformed mask having a predetermined shape is disposed above the laminated sand layer, and a spraying step in which a liquid binder which bonds sand grains together is sprayed from a position above the mask over the laminated thin sand layer. A layer of the sand mold is formed by the above-described steps. By repeating the above-described steps, the sand mold is obtained as the three-dimensional formed article of sand. In the above-described method, it is possible to use a nozzle or the like having an outlet of a relatively large diameter, to spray the liquid binder. In this case, it is considered possible to reduce occurrence of clogging of the nozzle.

PRIOR ART DOCUMENTS

PATENT DOCUMENTS

Patent Document 1: JP-A-9-168840
Patent Document 2: JP-A-9-141386
Patent Document 3: WO2004/112988 A2
Patent Document 4: WO 02/26419 A1

SUMMARY OF THE INVENTION

TECHNICAL PROBLEM

However, in the method of forming the sand mold by the laminating process as proposed in Patent Document 1 described above, the shell sand is cured by heating the shell sand by the irradiation with the laser beam. Therefore, this method has an inherent problem of generation of an odor by incineration of an organic substance during heating of the shell sand by the irradiation with the laser beam. Further, although occurrence of warpage of the sand layers can be prevented by the above-described method, a difference in the temperature is generated between parts of the sand layers irradiated with the laser beam, and the other parts of the sand layers not irradiated with the laser beam, resulting in tendency of generation of an internal stress. Therefore, the above-described method has a problem that secondary firing is required to be performed to mitigate the internal stress, for example. Moreover, in order to heat and cure the predetermined part of the sand layer by irradiating this part with the laser beam, the irradiation is required to be performed at a high power under a precise control, giving rise to problems that an expensive device is required for the laser irradiation, and an extremely large amount of energy is required for the heating.

On the other hand, in the multilayer molding method for forming the sand mold as proposed in Patent Document 2 described above, the sand layer is cured by spraying the liquid binder for curing the sand. The liquid binder easily adheres to an object, since the liquid binder has a high viscosity. Therefore, the above-described method has an inherent problem that a solid adheres to the inside of the nozzle for a long period of its use, resulting in clogging of the nozzle. Further, in the case where the liquid binder is dried while the device used for the method is not in operation, the liquid binder is solidified within or around the nozzle. Accordingly, it is necessary to take measures for preventing drying of the liquid binder and maintenance of the nozzle after its use, resulting in cumbersome maintenance of the device. Moreover, once the nozzle is clogged, it is difficult to remove clogging of the nozzle by cleaning the nozzle, for example. Therefore, in the event of clogging of the nozzle, it is necessary to replace the nozzle, giving rise to problems of extra work and cost required for the replacement.

Patent Document 3 describes a method for the layered construction of models whereby at least one first material is applied to a building platform and then a second material is selectively applied in layers. Both application steps are then repeated until the desired model is obtained and the both materials form a solid body with a desired mixing ratio. The first material comprises a moulding sand and the first and/or the second material comprises a binder, comprising a crystalline salt binder, or/and a protein binder.

Patent Document 4 describes a method for producing a part using a deposition technique, especially a part in the form of a casting mould or a casting core. A layered composite is built up in layers, the individual layers each containing particulate material and binding material as well as optionally, a treatment agent. The layers maintain a predetermined porosity. The binding agent can be hardened, especially with a fluid hardening agent. The layer composite is built up in the absence of the hardening agent. Once construction is complete, the layer composite is flooded with the fluid hardening agent using the residual porosity of the predetermined partial areas and in this way, is hardened.

The present invention was made in view of the background arts described above. It is an object of the invention to provide a multilayer molding method for forming a casting mold, which method makes it possible to produce the casing mold by using a relatively simple production device, while effectively preventing generation of an odor, without occurrence of clogging of a nozzle even after a long period of its use, and which method is suitable for a mass production of the casting mold.

SOLUTION TO PROBLEM

Under the above-described circumstances, the inventor of the present invention made intensive studies on the multilayer molding method for forming the casting mold, and found that the above-described object can be achieved by using, as a molding sand, a coated sand obtained by coating a refractory aggregate with a water-soluble binder, and solidifying or curing layers of the casting mold by spraying an aqueous medium over the layers and heating the layers. The present invention was completed based on this finding.

In order to achieve the above-described object, the present invention can be embodied within the scope of the appended claims.

ADVANTAGEOUS EFFECTS OF THE INVENTION

According to the above-described method of forming the laminar casting mold according to the invention, various effects can be achieved as described below.

(i) The aqueous medium sprayed from the nozzle over the sand layer basically consists of water. Accordingly, clogging of the nozzle does not take place even after a long period of its use.
(ii) An amount of thermal energy required for solidifying or curing the sand layer is not so large as to cause generation of an odor. Accordingly, the method of the invention permits reduction of the generation of the odor.
(iii) The need to perform secondary firing can be eliminated or reduced.
(iv) The sand layer can be solidified or cured with a small amount of thermal energy, without using a high-power device for generating a large amount of thermal energy.

BRIEF DESCRIPTION OF THE DRAWINGS

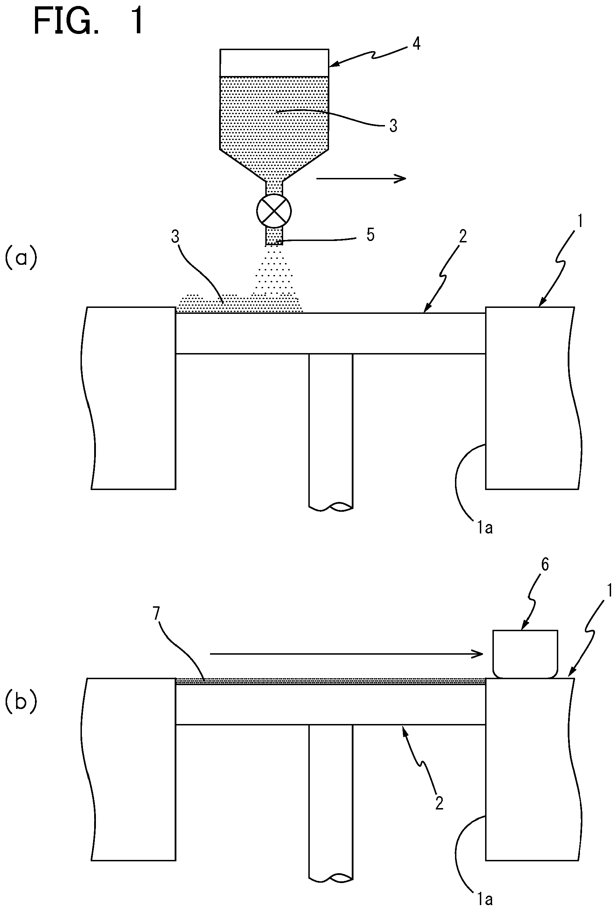

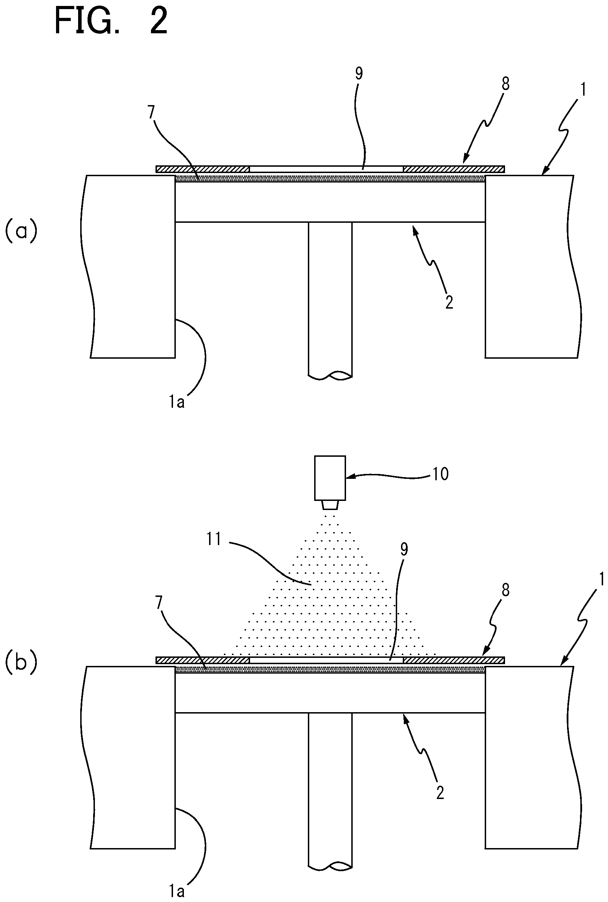

Figs. 1 are schematic views showing a first step of a method of forming a laminar casting mold according to a first embodiment of the invention, in which Fig. 1(a) shows a state in which a coated sand is being scattered, and Fig. 1(b) shows a state in which the scattered coated sand is spread to form a thin sand layer having a planar surface; Figs. 2 are schematic views showing a second step of the method of forming the laminar casting mold according to the first embodiment of the invention, in which Fig. 2(a) shows a state in which a mask is disposed above the sand layer, and Fig. 2(b) shows a state in which an aqueous medium is being sprayed;

Fig. 3 is a schematic view showing a third step of the method of forming the laminar casting mold according to the first embodiment of the invention;

Fig. 4 is a schematic view showing a state after completion of one series of the steps for forming a mold layer in the method of forming the laminar casting mold according to the first embodiment of the invention;

Fig. 5 is a schematic view showing a state in which a plurality of mold layers are formed and superposed on each other by repeating the steps of the method of forming the laminar casting mold according to the first embodiment of the invention, which steps are shown in Figs. 1-4;

Fig. 6 is a schematic view of the laminar casting mold obtained by the method of forming the laminar casting mold according to the first embodiment of the invention, shown in Figs. 1-5;

Fig. 7 is a schematic view showing a second step of a method of forming a laminar casting mold according to a second embodiment of the invention;

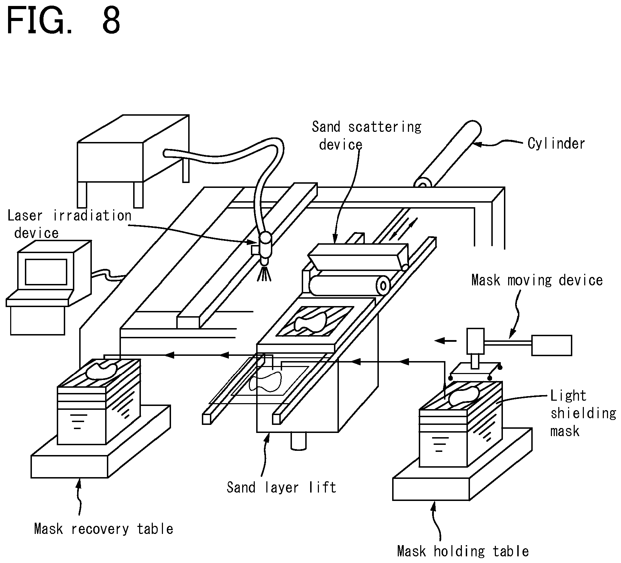

Fig. 8 is a schematic view showing an example of a method of forming a sand mold by a conventional laminating process; and

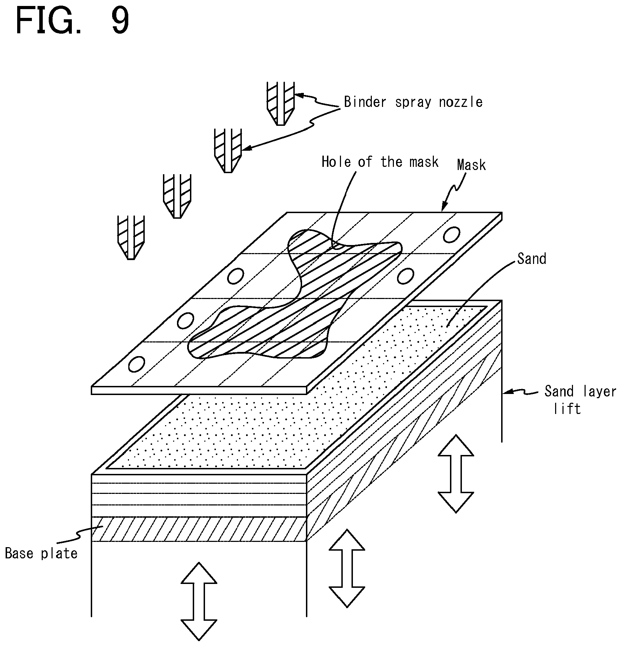

Fig. 9 is a schematic view showing an example of a conventional multilayer molding method for forming a sand mold.

## MODE FOR CARRYING OUT THE INVENTION

To clarify the present invention more specifically, representative embodiments of the invention will be described by reference to the drawings.

Referring first to Figs. 1-6, there is shown a method of forming a laminar casting mold according to a first embodiment of the invention. As shown in these figures, a casting-mold forming device used in this invention has a rectangular table 2 disposed within a forming cavity 1a which is formed within a frame 1 and which has a rectangular shape in its plan view. The table 2 is slidable in the vertical direction within the forming cavity 1a. The casting-mold forming device also has a storage tank 4 for supplying a coated sand 3, a spreading member 6 for spreading the coated sand 3 supplied onto the upper surface of the table 2, to form a thin sand layer 7 having a planar surface and a predetermined thickness, and a mask 8 for covering the surface of the sand layer 7 except a part of the surface which is to be cured. The storage tank 4, the spreading member 6 and the mask 8 are located above the frame 1. The casting-mold forming device further has a sprayer 10 which is located above the frame 1 with a predetermined distance therebetween, and which sprays an aqueous medium 11 in the form of a mist, and a heater 13 provided with a heat-generating element in the form of an electric heating wire. The above-described storage tank 4, spreading member 6, mask 8, sprayer 10 and heater 13 are selectively brought into position in respective steps for forming a mold layer. In this respect, it is noted that the present embodiment is configured to automatically bring the above-described tools 4, 6, 8, 10 and 13 into position. However, those tools may be manually or semi-automatically brought into position.

An outlet 5 for supplying the coated sand 3 onto the upper surface of the table 2 is provided in a lower portion of the storage tank 4, as shown in Fig. 1. Further, a preheating device (not shown) for preheating the coated sand 3 is provided within the storage tank 4. This preheating device has a structure in the form of a spiral tube, and is configured to preheat the coated sand 3 accommodated in the storage tank 4 by circulating a thermal medium such as a steam through the tube. The preheating device is configured to preheat the coated sand 3 generally to a temperature not lower than 40°C, and preferably to a temperature between about 40°C and about 200°C. As long as the preheating device can preheat the coated sand 3 to a desired temperature, the structure of the preheating device is not particularly limited. For example, it is possible to use a preheating device configured to supply a heated air into the storage tank 4 from its outside, as well as a preheating device configured to heat the coated sand 3 by using a heater provided within the storage tank 4.

As shown in Figs. 2, the mask 8 and the sprayer 10 constitute selective spray means in this embodiment. The aqueous medium 11 such as water is sprayed over a predetermined part of the sand layer 7 from the sprayer 10 disposed above the mask 8 which is provided with a hole 9 having a shape corresponding to one of a plurality of layers of the intended casting mold. In order to uniformly spray the aqueous medium 11 from a position above the mask 8, the sprayer 10 is disposed above the frame 1 with a suitable distance therebetween. It is preferable that the aqueous medium does not penetrate through the mask 8, and that the aqueous medium adhering to the mask 8 can be easily removed. Accordingly, the mask 8 is formed of a metallic, plastic or ceramic material, for example. The selective spray means is not particularly limited, as long as the selective spray means can spray water over the predetermined part of the sand layer 7. Other than the selective spray means in the present embodiment, there may be used, for example, an inkjet device which sprays the aqueous medium over the predetermined part of the sand layer 7 by an inkjet process, as described later. Any one or any combination of the above-described selective spray means may be used.

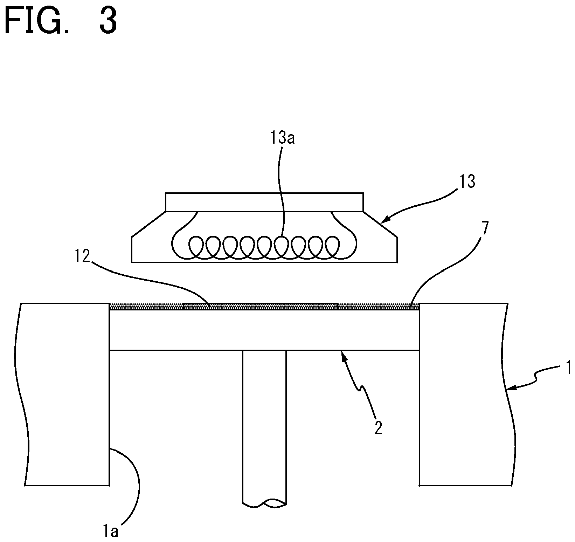

The heater 13 which is shown in Fig. 3 and used in this embodiment is configured to heat the sand layer 7 by using the heat-generating element in the form of the electric heating wire 13a. As the heat-generating element (13a) of the heater 13, there may be used silicon carbide, molybdenum disilicide, lanthanum chromite, molybdenum, carbon and the like, as well as metallic heat-generating elements (a Nichrome wire, a kanthal wire and a platinum wire). Further, an infrared-ray-generating element may be used as the heater 13 to heat the sand layer 7. It is also possible to heat the sand layer 7 by irradiation with a laser beam, so that only water is selectively evaporated in a part of the sand layer 7 irradiated with the laser beam. In this respect, it is noted that in the conventional technique, a binder is directly melted by heat generated by the laser, to cure the binder. However, in the present invention, a water-soluble binder is dissolved in the aqueous medium, and merely dried by the heat of the laser beam, whereby the sand layer 7 can be solidified or cured. Accordingly, in the present invention, it is sufficient to use the laser beam having an amount of heat required for merely drying the moistened coated sand, since the laser beam is not used to heat and cure the coated sand at a high temperature, resulting in advantages of a high energy efficiency and absence of necessity for using an expensive high-power laser device. The use of the laser beam has another advantage that the sand layer 7 can be locally heated without wasting of the irradiated heat. As described above, the part of the sand layer 7 over which the aqueous medium 11 has been selectively sprayed is heated by using the heater 13, and solidified or cured, whereby a mold layer 12 having an intended shape is formed.

The steps for forming the mold layer 12 according to the first embodiment of the invention, and formation of a formed article 14 (intended casting mold) as a one-piece body consisting of the mold layers 12 superposed on each other will be described.

<First Step>

Before formation of the mold layer 12, the upper surface of the frame 1 of the casting-mold forming device and the upper surface of the table 2 are flush with each other. When the formation of the mold layer 12 is started, the table 2 is moved downwards by a distance corresponding to the thickness of the sand layer 7. Then, the coated sand 3 stored in the storage tank 4 is supplied onto the table 2, by controlling an amount of supply of the coated sand 3 through the outlet 5, such that the coated sand 3 is scattered over the entire upper surface area of the table 2 with a substantially even thickness (as shown in Fig. 1(a)). At this time, the sand layer 7 is formed with the thickness of 0.5mm, for example, which thickness corresponds to the distance by which the table 2 is moved downwards. It is preferable that each sand layer 7 is formed so as to have an even thickness generally between about 0.1mm and about 3mm.

After the supply of the coated sand 3 onto the table 2 is terminated, the spreading member 6 is horizontally moved along the upper surface of the frame 1, to scrape an extra amount of the coated sand 3, whereby the sand layer 7 spread over the table 2 has a planar surface and the predetermined small thickness (as shown in Fig. 1(b)).

<Second Step>

Subsequently, the mask 8 provided with the hole 9 having the predetermined shape corresponding to one of the mold layers 12 of the intended casting mold is disposed above the sand layer 7 formed in the first step described above (as shown in Fig. 2(a)). Specifically described, each mask 8 is provided with the hole 9 having the shape corresponding to one of a plurality of divisions of the casting mold to be formed. The casting mold consists of the above-described divisions which are superposed on each other, and all of which have the same thickness corresponding to the thickness of each sand layer 7. By using the masks 8 corresponding to the respective divisions of the casting mold, in turns, the mold layers 12 having the respective shapes are successively formed and superposed on each other with initial formation of the lowermost mold layer 12, whereby the intended casting mold can be formed. In this respect, it is noted that in the case where the masks 8 used to form the individual mold layers 12 have the holes 9 of the same shape, the same mask 8 may be continuously used to form the individual mold layers 12. It is also possible to provide hooks or recesses in the masks 8 or the frame 1, to fix the masks 8 in position to the frame 1 by engagement of the hooks, for example.

Then, the aqueous medium 11 in the form of a mist is sprayed toward the mask 8 from the sprayer 10 disposed above the mask 8 with a predetermined distance therebetween (as shown in Fig. 2(b)), whereby the aqueous medium 11 in the form of the mist is sprayed over a predetermined area of the sand layer 7 through the hole 9 of the mask 8. In this respect, it is noted that the aqueous medium 11 is sprayed over the entirety of the mask 8, in the present embodiment. However, the aqueous medium 11 in the form of the mist may be successively sprayed over respective parts of the hole 9 of the mask 8 (each part having a predetermined width), along respective guide rails or the like, so that the aqueous medium 11 is sprayed over the entire area of the hole 9. The form of the sprayer 10 is not particularly limited, as long as the sprayer 10 can spray the aqueous medium 11 in the form of a mist. As described above, the coated sand 3 is moistened with the aqueous medium 11 sprayed over the specific area of the sand layer 7 (the area corresponding to the hole 9), whereby the water-soluble binder of a coating layer covering a refractory aggregate of the coated sand 3 is dissolved in the aqueous medium 11, and coheres among sand grains. As a result, the grains of the coated sand 3 adhere or stick to each other in the area of the sand layer 7 over which the aqueous medium 11 has been sprayed.

The method of spraying the aqueous medium 11 is not particularly limited, as long as the method makes it possible to spray an adequate amount of the aqueous medium 11 over the sand layer 7, such that the coated sand 3 is not excessively moistened. For instance, there may be adequately used a method of dropping the aqueous medium, the method of spraying the aqueous medium in the form of a mist by using the sprayer or the like, and a method of spraying the aqueous medium in the form of a vapor or a superheated steam. A saturated steam is preferably used as the vapor. In the case of the method using the mask as in the present embodiment, it is preferable to spray the aqueous medium in the form of the mist, whereas in the case of the inkjet process described later, the aqueous medium can be preferably sprayed in any of the forms of drops, the mist, and the vapor.

After moistening the coated sand 3 with the aqueous medium 11, it is necessary to dry the sand layer 7. Therefore, it is preferable that the temperature of the aqueous medium 11 is equal to or higher than the room temperature. Accordingly, the temperature of the aqueous medium is generally between about 20°C and about 100°C, and more preferably between about 30°C and about 95°C. In the case of using the vapor of the aqueous medium, the temperature of the vapor is preferably set at 80-100°C, by taking measures for withstanding the high temperature.

Water is a representative example of the aqueous medium 11 used in the present invention. The kind of the water is not particularly limited, as long as dirt and dust are not mixed in the water. Examples of the water include pure water, tap water, distilled water and industrial water. From the standpoint of prevention of clogging of a nozzle, the pure water and the distilled water are preferably used. It is also possible to add to the aqueous medium, small amounts of a curing agent such as an acid and an ester, a curing accelerator, a surfactant or the like, as long as almost no change in viscosity of the aqueous medium is caused by the addition of the curing agent, curing accelerator and surfactant. In the case where the curing agent, curing accelerator or surfactant is added to the aqueous medium, the viscosity of the aqueous medium is preferably 0.01-20cP (centipoise), more preferably 0.01-10cP, and most preferably 0.1-5cP. In the case where the aqueous medium solely consists of the water, the viscosity of the aqueous medium is within a range of 0.25-1.3cP at a temperature of 20-100°C. In the case of using the curing agent or the curing accelerator, which is not soluble in the water, the curing agent or the curing accelerator may be sprayed before or after spraying of the aqueous medium. In this case, the curing agent or the curing accelerator, which is not soluble in the water, is preferably used in the form of a liquid.

<Third Step>

After the aqueous medium 11 has been sprayed over the sand layer 7, the heater 13 provided with the electric heating wire 13a is disposed above the sand layer 7 with a predetermined distance therebetween. By heating the sand layer 7 with the heat generated by the heater 13, the moistened coated sand 3 is dried (as shown in Fig. 3). Thus, in the state in which the coated sand 3 has been moistened with the aqueous medium 11 in the second step to dissolve the water-soluble binder of the coating layer of the coated sand 3, so that the grains of the coated sand 3 adhere to each other, the water contained in the moistened coated sand 3 is evaporated in the third step, to solidify or cure the sand layer 7 such that the grains of the refractory aggregate provided with the water-soluble binder are bonded to each other, whereby the mold layer 12 is formed. In this respect, it is noted that the part of the sand layer 7 in which the coated sand 3 is moistened with the aqueous medium 11 has a higher degree of thermal conductivity than the other part of the sand layer 7 in which the coated sand 3 is not moistened with the aqueous medium 11. Accordingly, only the part of the sand layer 7 in which the coated sand 3 is moistened with the aqueous medium 11 can be efficiently solidified or cured by heating. At this time, the sand layer 7 is heated by using the heater 13 in order to solidify or cure the sand layer 7 by drying the coated sand 3. Accordingly, it suffices to heat the sand layer 7 to a temperature between about 100°C and about 150°C. Therefore, different parts of the sand layer 7 do not have a large difference in their temperature, so that warpage or the like of the cured sand layer (12) can be prevented. Further, the sand layer 7 can be solidified or cured at a low temperature of about 100°C. Accordingly, it is possible to effectively prevent generation of an odor, which is conventionally generated by heating the coated sand to a high temperature (about 200-300°C). Further, the heater 13 need not have a high power, resulting in an advantage that only a small amount of energy is consumed by heating.

Where the sand layer 7 is heated and dried in an atmosphere of a heated air, the drying of the sand layer 7 can be promoted. As the other measures for promoting curing of the sand layer 7, it is possible to heat and dry the sand layer 7 in an atmosphere including a carbon dioxide or an ester in the form of a gas, or in an atmosphere of an inert gas such as a nitrogen gas, so that the water-soluble binder is neutralized by the carbon dioxide, the ester in the form of a gas, or the inert gas. Particularly in the case where the water-soluble binder is an alkaline resol resin, the curing of the sand layer 7 is advantageously promoted by curing the sand layer 7 in the atmosphere of the carbon dioxide. A method of conducting the above-described measures for promoting the drying and curing of the sand layer 7 is not particularly limited, as long as the method makes it possible to heat and dry the sand layer 7 in an atmosphere of a predetermined gas. For instance, there may be used a method of air-tightly sealing a space in which the above-described third step is performed, and replacing an atmosphere within the space with the heated air, the carbon dioxide, the ester in the form of a gas or the inert gas, and forming the casting mold in the above-described space. It is also possible to regulate the temperature within the above-described space by heating.

It is also possible to blow a gas toward the sand layer 7, or pass the gas through the sand layer 7, simultaneously with or before or after the heating of the sand layer 7. Examples of the gas include an air, the heated air, the superheated steam, the carbon dioxide, the ester in the form of a gas and the inert gas. Further, drying of the coated sand 3 can be promoted by circulating the gas. A method for blowing or passing the gas is not particularly limited, as long as the coated sand 3 is not blown off by the gas blown thereto or passed therethrough. For instance, there may be used a method of blowing the gas toward the sand layer 7 from an outlet provided above the sand layer 7, or a method of passing the gas through the sand layer 7 by circulating the atmosphere within the space for forming the casting mold.

Further, in order to prevent water vapor from being left within the space for forming the casting mold, it is possible to perform a step of sucking a gas within the space, to exhaust the gas out of the space. The suction of the gas is preferably performed after heating and drying the sand layer in the third step. However, the suction of the gas may be performed during the third step or the entire steps, as long as the suction of the gas does not cause an adverse effect on those steps.

<Repetition of the Steps>

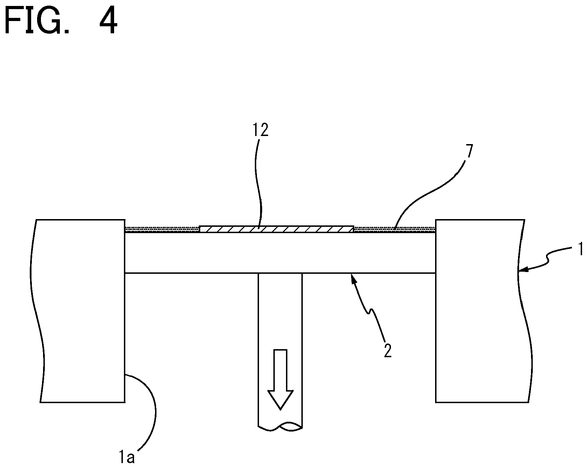

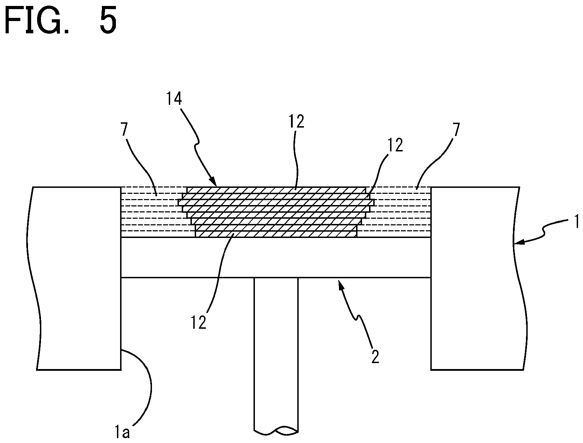

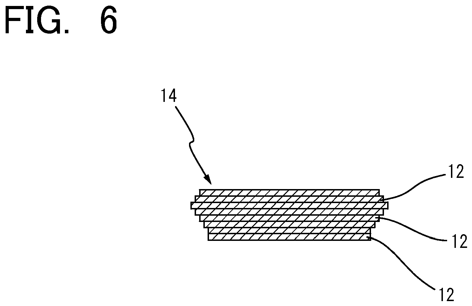

The above-described first through third steps are performed as a series (cycle) of steps for forming the mold layer 12. After moving the table further downwards by the distance corresponding to the thickness of each sand layer (as shown in Fig. 4), the series of steps for forming the mold layer 12 are repeated, whereby another mold layer 12 is integrally formed on the last formed mold layer 12, to form a laminar structure. By repeating the above-described formation of the mold layer 12 a plurality of times, the mold layers 12 are successively superposed on each other to form a one-piece body (as shown in Fig. 5), whereby the formed article 14 which consists of the required number of the mold layers 12 and which gives the casting mold having the desired configuration is obtained. Thereafter, the intended casting mold (14) is taken out of the casting-mold forming device (frame 1) by removing unsolidified or uncured sand from the device (as shown in Fig. 6).

By the way, the coated sand 3 used in the present invention is obtained by coating the refractory aggregate with the water-soluble binder. The refractory aggregate is adequately selected from various kinds of refractory aggregate conventionally used for the casting mold. Specific examples of the refractory aggregate include silica sand, chromite sand, zircon sand, olivine sand, alumina sand, synthetic mullite sand and the like. Among the above-indicated sands, an artificially sand in the form of true sphere is preferably used from the standpoint of reduction of an amount of use of the binder. The above-indicated refractory aggregate may be a reclaimed sand or a recovery sand, which have been used as a molding sand once or a plurality of times for forming the casting mold, as well as a fresh or new sand, and may be a mixture of the fresh sand, reclaimed sand and recovery sand. The grain size of the coated sand 3 which is obtained by using the refractory aggregate described above and which is used for the laminar casting mold is controlled within a range of 80-150, and preferably 90-130, according to the AFS coefficient standard specified by the JACT test method S-1 (method for testing grain size of molding sand), from viewpoints of ease of passage of a gas through the casting mold to be obtained, ease of scattering of the coated sand 3, and the thickness of the sand layer 7 in the formation of the casting mold using the coated sand 3. The grain size of the coated sand 3 smaller than AFS 80 gives rise to a risk of failure to achieve a sufficiently high solidification strength. On the other hand, the grain size of the coated sand 3 larger than AFS 150 gives rise to a risk of deterioration of the ease of passage of the gas through the casting mold to be obtained. It is particularly noted that the surface condition of a cast article obtained by using the casting mold 14 improves with a decrease of the thickness of the sand layer 7 (mold layer 12). Therefore, it is desirable to use an aggregate of a small grain size, since the use of such an aggregate makes it easy to form the thin sand layer 7.

In the present invention, the water-soluble binder is used as a binding agent covering the refractory aggregate described above. The water-soluble binder is selected from among a thermosetting resin, a saccharide, a synthetic polymer, a salt, a protein and an inorganic polymer, and comprises one or more of the thermosetting resin and the inorganic polymer.

Examples of the thermosetting resin used as the water-soluble binder include a resol type phenolic resin, a furan resin, a water-soluble epoxy resin, a water-soluble melamine resin, a water-soluble urea resin, a water-soluble unsaturated polyester resin and a water-soluble alkyd resin. It is advantageous to add a curing agent such as an acid or an ester to the thermosetting resin, in order to improve its thermosetting property. Among the above-indicated thermosetting resins, the resol type phenolic resin is preferably used in the present invention. The phenolic resin can be prepared by reacting a phenol and a formaldehyde with each other in the presence of a reaction catalyst.

The phenol as a raw material of the phenolic resin includes phenol and its derivatives, for example, trifunctional phenols such as m-cresol, resorcinol and 3,5-xylenol, tetrafunctional phenols such as bisphenol A and dihydroxydiphenyl methane, and o-substituted bifunctional phenols and p-substituted bifunctional phenols such as o-cresol, p-cresol, p-ter-butylphenol, p-phenylphenol, p-cumylphenol, p-nonylphenol, 2,4-xylenol and 2,6-xylenol. It is also possible to use a halogenated phenol substituted with chlorine or bromine. Any one or a mixture of the above-indicated phenols may be used.

Examples of the formaldehyde include formaldehyde, paraformaldehyde, acetaldehyde, benzaldehyde, trioxane and tetraoxane. It is also possible to substitute a part of the formaldehyde with furfural or furfuryl alcohol. The formaldehyde is most preferably used in the form of an aqueous solution. Formalin is the aqueous solution of the formaldehyde, which is preferably used in the present invention.

To obtain the intended phenolic resin, a molar ratio between the phenol and the formaldehyde is preferably set within a range between 1 : 0.6 and 1 : 3.5, and more preferably between 1 : 1.5 and 1 : 2.5.

In the case of preparing a novolac type phenolic resin as the thermosetting resin described above, it is preferable to use, as the reaction catalyst: an inorganic acid such as hydrochloric acid, sulfuric acid and phosphoric acid; an organic acid such as oxalic acid, p-toluene sulfonic acid, benzene sulfonic acid and xylene sulfonic acid; or zinc acetate, for example. In the case of preparing the resol type phenolic resin, oxides and hydroxides of alkali metals and/or alkaline earth metals may be used as the reaction catalyst. Examples of the reaction catalyst preferably used in the preparation of the resol type phenolic resin include: aliphatic primary amines, aliphatic secondary amines and aliphatic tertiary amines, such as dimethylamine, triethylamine, butylamine, dibutylamine, tributylamine, diethylene triamine and dicyandiamide; aliphatic amines having an aromatic ring, such as N,N-dimethylbenzylamine; aromatic amines such as aniline and 1,5-naphthalenediamine; ammonia; and hexamethylenetetramine, as well as naphthenic acids of divalent metals and hydroxides of divalent metals. In the case where the water-soluble binder in the form of the phenolic resin is diluted for its use, alcohols, ketones, esters, polyhydric alcohols and the like are used as a solvent for diluting the phenolic resin.

In the present invention, it is preferable to use the water-soluble alkaline resol resin as the phenolic resin. The water-soluble alkaline resol resin is an alkaline resol type phenolic resin obtained by reacting the phenol and an aldehyde with each other in the presence of a large amount of an alkaline substance, such that a molar number of the alkaline substance is about 0.01-2.0 times that of the phenol, preferably about 0.3-1.0 time that of the phenol. Examples of the alkaline substance used in the preparation of the water-soluble alkaline resol resin include hydroxides of alkali metals such as sodium hydroxide, potassium hydroxide and lithium hydroxide. Any one or a mixture of the above-indicated alkaline substances is used. By using the alkaline resol resin described above, it is possible to provide the casting mold that can be used in many fields such as castings of iron and steel.

Examples of the saccharide used as the water-soluble binder include monosaccharides, oligosaccharides and polysaccharides. It is possible to use any one or a plurality of saccharides selected from the various kinds of monosaccharides, oligosaccharides and polysaccharides. Examples of the monosaccharides include glucose (grape sugar), fructose (fruit sugar) and galactose. Examples of the oligosaccharides include disaccharides such as maltose (malt sugar), sucrose (cane sugar), lactose (milk sugar) and cellobiose. Examples of the polysaccharides include starch sugar, dextrin, xanthan gum, curdlan, pullulan, cycloamylose, chitin, cellulose and starch. It is also possible to use gums of plant mucilage such as gum arabic. Further, it is possible to use carboxylic acid as a curing agent for the saccharides, particularly for the polysaccharides.

Examples of the synthetic polymer used as the water-soluble binder include polyethyleneoxide, poly-$\alpha$-hydroxy-acrylic acid, acrylic acid copolymers, acrylate copolymers, methacrylate copolymers, nonionic polyacrylamide, anionic polyacrylamide, cationic polyacrylamide, polyaminoalkylmethacrylate, acrylamide-acrylic acid copolymer, polyvinyl sulfonic acid, polystyrene sulfonic acid, sulfonated maleic acid polymer, polyvinyl alcohol, polyvinylpyrrolidone, polyethylene glycol, polyvinylmethylether, polyether modified silicone, and modified substances of the above-indicated synthetic polymers. Any one or a plurality of the above-indicated synthetic polymers and modified substances thereof is/are used as the water-soluble binder.

The salt used as the water-soluble binder is the salt which is solidified by drying it after adding water thereto. Examples of the salt include sulfates such as magnesium sulfate and sodium sulfate, bromides such as sodium bromide and potassium bromide, carbonates such as sodium carbonate and potassium carbonate, and chlorides such as barium chloride, sodium chloride and potassium chloride. Examples of the protein include gelatin and glue.

In the present invention, the inorganic polymer is also preferably used as the water-soluble binder. Examples of the inorganic polymer include a water glass, colloidal silica, alkyl silicate, bentonite and cement. Examples of the water glass among the above-indicated inorganic polymers include soluble silicate compounds such as sodium silicate, potassium silicate, sodium metasilicate, potassium metasilicate, lithium silicate and ammonium silicate. Among the above-indicated soluble silicate compounds, sodium silicate and potassium silicate are preferably used as the water-soluble binder. In this respect, it is noted that the silicate compounds are classified into various kinds depending on their molar ratio. For instance, sodium silicate is classified into Nos. 1-5, while potassium silicate is classified into Nos. 1 and 2. In the field of casting, the water glass is preferably used as the water-soluble binder, and sodium silicate is particularly preferably used as the water-soluble binder, to obtain the casting mold that can be used in the many fields such as castings of iron and steel.

By the way, in production of the coated sand used in the present invention, the water-soluble binder is generally used in an amount of 0.3-5 parts by mass, and preferably 0.5-3 parts by mass, in terms of its solid content, with respect to 100 parts by mass of the refractory aggregate. To produce the coated sand, the refractory aggregate and the water-soluble binder are kneaded or mixed with each other, to coat the surface of the refractory aggregate with the water-soluble binder, and water in the aqueous solution of the water-soluble binder is evaporated, whereby the refractory aggregate coated with the water-soluble binder is obtained in the form of dry granules having fluidity at the room temperature and a water content not higher than 0.5%. In this respect, it is noted that it is necessary to rapidly evaporate the water in the aqueous solution of the water-soluble binder, before curing of the water-soluble binder proceeds. The water in the aqueous solution of the water-soluble binder is generally evaporated within five minutes, and preferably within two minutes, to obtain the refractory aggregate coated with the water-soluble binder, in the form of the dry granules.

Therefore, it is advantageous to use, as a means for rapidly evaporating the water in the aqueous solution of the water-soluble binder, a method of preheating the refractory aggregate, and kneading or mixing the preheated refractory aggregate with the aqueous solution of the water-soluble binder. By kneading or mixing the aqueous solution of the water-soluble binder with the preheated refractory aggregate, the water in the aqueous solution is rapidly evaporated by the heat of the preheated refractory aggregate, whereby the water content of the refractory aggregate coated with the water-soluble binder can be efficiently reduced, to advantageously obtain the dry granules having fluidity at the room temperature. The temperature to which the refractory aggregate is preheated is adequately selected depending on the water content in the aqueous solution of the water-soluble binder and the amount of use of the aqueous solution, for example. Generally, it is desirable to preheat the refractory aggregate to about 100-140°C. Where the refractory aggregate is preheated to an excessively low temperature, it is difficult to effectively evaporate the water in the aqueous solution of the water-soluble binder. On the other hand, where the refractory aggregate is preheated to an excessively high temperature, there arises a risk that curing of the water-soluble binder proceeds. The water content of the coated sand obtained as described above is reduced so as to be not higher than 0.5% by mass, and preferably not higher than 0.3% by mass, whereby the coated sand is obtained in the form of the dry granules which flow smoothly, and which have excellent properties such as a sufficiently high degree of fluidity at the room temperature.

In the production of the coated sand, a solid oxide, a salt or the like may be used as an additive, together with the refractory aggregate and the water-soluble binder. Use of the solid oxide and salt gives a good effect on a moisture resistance of the coated sand to be obtained. It is effective to use the solid oxide such as oxides of silicon, zinc, magnesium, calcium, lead and boron. Among these, silicon dioxide, zinc oxide and boron oxide are preferably used. The silicon dioxide is preferably a precipitated silica or a pyrogenic silica. On the other hand, examples of the salt include zinc carbonate, sodium tetraborate and potassium tetraborate.

It is also possible to use a coupling agent, a lubricant and a mold releasing agent as additives. The coupling agent serves to strengthen a bond between the refractory aggregate and the binder. Examples of the coupling agent include a silane coupling agent, a zirconate coupling agent and a titanate coupling agent. On the other hand, the lubricant serves to improve the fluidity of the coated sand. Examples of the lubricant include: liquid paraffin; paraffin wax; synthetic polyethylene wax; montanic acid wax; stearic acid; stearyl alcohol; fatty acid amides such as stearic acid amide, oleic acid amide, and erucic acid amide; alkylene fatty acid amides such as methylenebis stearic acid amide and ethylenebis stearic acid amide; metal stearate; lead stearate; zinc stearate; calcium stearate; magnesium stearate; monoglyceride stearate; stearyl stearate; and hydrogenated oils. Examples of the mold releasing agent include paraffins, waxes, light oils, machine oils, spindle oils, insulating oils, waste oils, plant oils, fatty acid esters, organic acids, graphite particulates, mica, vermiculite, fluorine-based mold releasing agents, and silicone-based mold releasing agents.

In the present invention, it is possible to mix the coated sand with other granules. The other granules are not particularly limited, as long as they are solidified by heating and drying them after they are moistened with water.

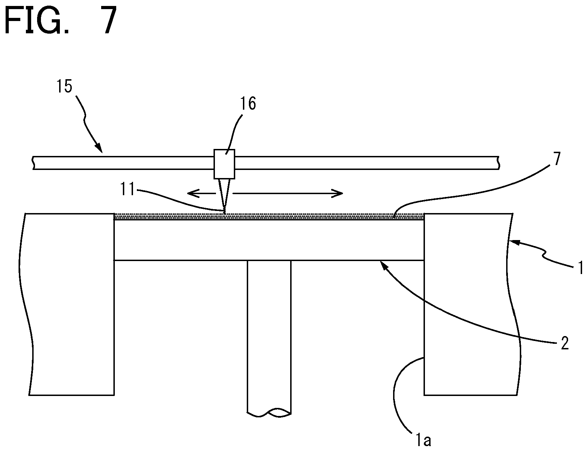

According to a second embodiment of this invention, it is also possible to perform a second step as shown in Fig. 7.

Specifically described, a casting-mold forming device used in the second embodiment of this invention has an inkjet device 15 for spraying a liquid in the form of an aqueous medium by an inkjet process, as shown in Fig. 7. The inkjet device 15 has a memory device and a control device, which are not shown, and a nozzle 16 which is movable along the upper surface of the sand layer 7. The predetermined plane shapes of the respective mold layers are stored as image signals in the memory device. The inkjet device 15 is configured to jet or spray the liquid over parts of the sand layers corresponding to the predetermined plane shapes of the respective mold layers, by controlling operations of the nozzle 16 by the control device according to the image signals. In the present embodiment, the inkjet device 15 constitutes the selective spray means. Configurations of the casting-mold forming device of the second embodiment other than the selective spray means are the same as those of the casting-mold forming device of the first embodiment described above, and will not be described redundantly.

By the way, the second step for forming the casting mold according to the second embodiment of this invention is performed as described below.

Namely, in the second step, water (aqueous medium 11) in the form of a mist is sprayed from the nozzle 16 of the inkjet device 15 toward the sand layer 7, such that the water is successively sprayed over respective minute areas of the plane shape of one of a plurality of divisions of the casting mold to be formed. The casting mold consists of the above-described divisions which are superposed on each other such that the divisions extend in the horizontal direction, and all of which have the same thickness corresponding to the thickness of each sand layer 7. The aqueous medium 11 is sprayed over the parts of the successive sand layers corresponding to the plane shapes of the respective mold layers, with initial spraying of the aqueous medium 11 over the part of the first sand layer corresponding to the plane shape of the lowermost mold layer. The plane shapes of the respective mold layers can be determined by obtaining data of the configuration of the intended sand mold from CAD data of the configuration of an end product, and converting the thus obtained data into data of cross-sectional shapes of the respective divisions of the sand mold, each of which has the thickness corresponding to the thickness of each sand layer. The nozzle 16 of the inkjet device 15 for jetting or spraying the aqueous medium 11 has an extremely small diameter of about 20-100$\mu$m, for example. However, the liquid jetted or sprayed from the nozzle 16 is the aqueous medium, so that clogging of the nozzle does not take place. The first and third steps for forming the casting mold according to the second embodiment are the same as those described above with respect to the first embodiment, and will not be described redundantly. Further, the steps of the second embodiment are repeated as in the first embodiment, so that repetition of the steps will not be described redundantly.

EXAMPLE

To clarify the invention more specifically, some examples of the invention will be described. It goes without saying that the invention is by no means limited to the details of the illustrated examples. It is to be understood that the invention may be embodied with various other changes, modifications and improvements, which are not illustrated herein and which may occur to those skilled in the art, without departing from the spirit of the invention. In the examples and comparative examples described below, measurement of flexural strength and a test for examining clogging of the nozzle were conducted as described below.

- Measurement of flexural strength (N/cm$^2$) -

A breaking load of a test piece having a width of 30mm, a thickness of 10mm and a length of 85mm was measured by using a measuring device (a digital molding-sand strength tester available from TAKACHIHO SEIKI CO., LTD., JAPAN). The flexural strength was calculated from the measured breaking load according to the following formula.

$$\text{Flexural strength} = 1.5 \times LW/ab^2$$

[L: length (cm) of the support span, W: breaking load (kgf), a: width (cm) of the test piece, b: thickness (cm) of the test piece] In the examples, test pieces having the flexural strength not lower than 200N/cm$^2$ were considered acceptable.

- Test for examining clogging of the nozzle -

Various liquid samples were passed through a hypodermic needle (inside diameter: 50$\mu$m, length: 5mm) having the inside diameter equivalent to the diameter of the nozzle 16 of the inkjet device 15, to examine whether clogging of the hypodermic needle takes place. Initially, about 1ml of each liquid sample was collected in a syringe (2ml) provided with the hypodermic needle, and the 1ml of the liquid sample was ejected from the needle at a rate of 0.1ml/s. Then, after leaving the syringe two hours, another about 1ml of the liquid sample was collected in the syringe, and the 1ml of the liquid sample was ejected from the needle at the rate of 0.1ml/s. After repeating the above-described operations three times, the hypodermic needle was examined whether it suffered from clogging. This test was conducted in an atmosphere of 20°C. In the case where the liquid sample could not be ejected from or suctioned into the hypodermic needle even by applying a load of about 1Kg, the needle was judged as suffering from clogging.

- Production Example 1 of RCS -

A commercially available artificial spherical molding sand LUNAMOS #50 (Trade Name; available from Kao Corporation, JAPAN) was provided as a refractory aggregate. A commercially available aqueous solution of an alkaline resol resin: HPR 830 (Trade Name; available from ASAHI ORGANIC CHEMICALS INDUSTRY CO., LTD., JAPAN) was provided as a water-soluble binder. A Shinagawa-type universal stirrer (5DM-r type; manufactured by DALTON CO., LTD., JAPAN) was charged with the LUNAMOS #50 heated to about 120°C, and the aqueous solution of the alkaline resol resin described above was introduced into the stirrer in an amount of 3.0 parts by mass, in terms of its solid content, with respect to 100 parts by mass of the LUNAMOS #50. The contents in the stirrer were kneaded for 50 seconds to evaporate water, and stirred and mixed until an aggregate structure of the sand grains collapsed. After adding 0.1 part by mass of calcium stearate to the contents in the stirrer and mixing the contents for 10 seconds, the contents were taken out of the stirrer, whereby a dry coated sand A having free flowing characteristic at the room temperature was obtained.

- Production Example 2 of RCS -

The commercially available artificial spherical molding sand LUNAMOS #50 (Trade Name; available from Kao Corporation) was provided as the refractory aggregate. An aqueous solution of sodium silicate was prepared by diluting with water commercially available sodium silicate No. 2 (Trade Name; available from Fuji Kagaku Corp., JAPAN) used as the water-soluble binder. The Shinagawa-type universal stirrer (5DM-r type; manufactured by DALTON CO., LTD.) was charged with the LUNAMOS #50 heated to about 120°C, and the aqueous solution of sodium silicate described above was introduced into the stirrer in an amount of 1.0 part by mass, in terms of its solid content, with respect to 100 parts by mass of the LUNAMOS #50. The contents in the stirrer were kneaded for three minutes to evaporate water, and stirred and mixed until an aggregate structure of the sand grains collapsed. Thereafter, the contents were taken out of the stirrer, whereby a dry coated sand B having free flowing characteristic at the room temperature was obtained.

- Example 1 -

A casting mold was formed according to the first embodiment of the invention by using the casting-mold forming device having the frame 1 and the table 2, which are shown in Fig. 1, and the coated sand A described above. Initially, in the first step, the table 2 was moved downwards by a distance of 0.5mm, and then the coated sand A was spread over the table 2 to form the thin sand layer 7 having a planar surface. Then, in the second step, the mask 8 having a rectangular hole 9 of 30mm x 85mm was disposed above the sand layer 7 formed in the first step. Thereafter, the aqueous medium 11 in the form of a mist was sprayed toward the mask 8 from the sprayer 10 disposed above the mask 8. In this respect, it is noted that distilled water having a temperature of 25°C was used as the aqueous medium 11. Then, in the third step, the heater 13 provided with the electric heating wire 13a was disposed above the sand layer 7 over which the distilled water had been sprayed. By heating the sand layer 7 with heat generated by the heater 13, the moistened coated sand A was dried and cured, whereby the mold layer 12 corresponding to the shape of the hole 9 of the mask 8 was obtained. The above-described first through third steps were performed as a series of steps, and repeated until the thickness (height) of the casting mold (formed article 14) consisting of the mold layers 12 superposed on each other reached 10mm. The flexural strength of the thus obtained laminar casting mold (14) is shown in Table 1 given below.

- Example 2 -

A laminar casting mold (14) was formed as in the Example 1, by using the coated sand B in place of the coated sand A used in the Example 1. The flexural strength of the thus obtained laminar casting mold (14) was measured, and is shown in Table 1.

- Example 3 -

A laminar casting mold (14) was formed as in the Example 1, by using an aqueous solution obtained by adding 10 parts by mass of $\gamma$-butyrolactone to 100 parts by mass of the distilled water, in place of the distilled water used in the Example 1. The flexural strength of the thus obtained laminar casting mold (14) was measured, and is shown in Table 1.

- Example 4 -

A laminar casting mold (14) was formed as in the Example 2, by using an aqueous solution obtained by adding 10 parts by mass of methanol to 100 parts by mass of the distilled water, in place of the distilled water used in the Example 2. The flexural strength of the thus obtained laminar casting mold (14) was measured, and is shown in Table 1.

Table 1

|  | Example 1 | Example 2 | Example 3 | Example 4 |
|---|---|---|---|---|
| Flexural strength (N/cm$^2$) | 292 | 368 | 480 | 471 |

As is apparent from the results shown in Table 1, all of the laminar casting molds obtained in the Examples 1-4 according to the invention have sufficiently high flexural strengths. Further, from comparisons between the Examples 1 and 3 and between the Examples 2 and 4, it is recognized that the flexural strength can be further advantageously improved by adding adequate amounts of curing agents to the distilled water sprayed over the sand layer 7.

- Example 5 -

The test for examining clogging of the nozzle was conducted by the test method described above, by using water (distilled water) as the liquid to be sprayed over the sand layer 7. The result of the test is shown in Table 2 given below.

- Comparative Example 1 -

The test for examining clogging of the nozzle was conducted as in the Example 5, by using an aqueous solution of an alkaline resol resin as the liquid to be sprayed over the sand layer 7. The aqueous solution of the alkaline resol resin was prepared so as to have a viscosity of 10cP at 25°C by diluting commercially available HPR 830 (Trade Name; available from ASAHI ORGANIC CHEMICALS INDUSTRY CO., LTD.) with water. The result of the test is shown in Table 2.

- Comparative Example 2 -

The test for examining clogging of the nozzle was conducted as in the Example 5, by using an aqueous solution of sodium silicate as the liquid to be sprayed over the sand layer 7. The aqueous solution of sodium silicate was prepared so as to have a viscosity of 10cP at 25°C, by diluting the commercially available sodium silicate No. 2 (Trade Name; available from Fuji Kagaku Corp.) with water. The result of the test is shown in Table 2.

Table 2

|  | Sprayed liquid | Clogging |
|---|---|---|
| Example 5 | Water | Clogging did not take place. |
| Comparative Example 1 | Aqueous solution of alkaline resol resin | Clogging took place (after the syringe was left for the first time). |
| Comparative Example 2 | Aqueous solution of sodium silicate | Clogging took place (after the syringe was left for the first time). |

As is apparent from the results shown in Table 2, in the cases where the aqueous solution of the alkaline resol resin and the aqueous solution of sodium silicate, which serve as binders, were used as the liquid to be sprayed over the sand layer 7, as in the Comparative Examples 1 and 2, the liquid (binder) adhered to the path of its spraying when it was left within the path, giving rise to a problem of occurrence of clogging of the nozzle having the smallest inside diameter throughout the path. On the other hand, clogging of the nozzle did not take place where water is used as the liquid to be sprayed over the sand layer 7, as in the Example 5, so that the nozzle can be used for a long period of time.

NOMENCLATURE OF REFERENCE SIGNS

| 1: Frame | 1a: Forming cavity |
|---|---|
| 2: Table | 3: Coated sand |
| 4: Storage tank | 5: Outlet |
| 6: Spreading member | 7: Sand layer |
| 8: Mask | 9: Hole |
| 10: Sprayer | 11: Aqueous medium |
| 12: Mold layer | 13: Heater |
| 13a: Electric heating wire | 14: Formed article |
| 15: Inkjet device | |

**Claims**

1. A method of forming a laminar casting mold (14) as a one-piece body consisting of a plurality of mold layers (12) which are formed of a molding sand, and which are superposed on each other, wherein each of the plurality of mold layers (12) is formed by mold-layer forming steps comprising:

   a first step of spreading a coated sand (3) which is obtained by coating a refractory aggregate with a water-soluble binder and used as the molding sand, to form a thin sand layer (7) having a planar surface and a predetermined thickness, wherein the water-soluble binder is selected from one or more of a thermosetting resin, a saccharide, a synthetic polymer, a salt, a protein and an inorganic polymer, and comprises one or more of the thermosetting resin and the inorganic polymer;
   a second step of spraying an aqueous medium (11) by using selective spray means (8, 10; 15), selectively over a part of the sand layer (7) which part gives one of the plurality of mold layers (12); and
   a third step of heating said part of the sand layer (7) over which the aqueous medium (11) has been sprayed, to solidify or cure said part,
   and wherein the plurality of mold layers (12) are successively formed and superposed on each other by repeating said mold-layer forming steps a required number of times, whereby the laminar casting mold (14) having an intended three-dimensional configuration is obtained as the one-piece body consisting of the plurality of mold layers (12) superposed on each other.

2. The method of forming the laminar casting mold (14) according to claim 1, wherein said selective spray means (8, 10; 15) comprises a mask (8) provided with a hole (9) having a shape corresponding to one of said plurality of mold layers (12), and said second step comprises disposing said mask (8) above said sand layer (7), and spraying said aqueous medium (11) from a position above the mask (8).

3. The method of forming the laminar casting mold (14) according to claim 1, wherein said selective spray means (8, 10; 15) is an inkjet device (15), and said second step comprises spraying said aqueous medium (11) from the inkjet device (15) by an inkjet process, selectively over only said part of the sand layer (7) giving said one of the plurality of mold layers (12).

4. The method of forming the laminar casting mold (14) according to any one of claims 1 to 3, wherein said aqueous medium (11) is sprayed in the form of a mist in said second step.

5. The method of forming the laminar casting mold (14) according to any one of claims 1 to 3, wherein said aqueous medium (11) is sprayed in the form of a steam or a superheated steam in said second step.

6. The method of forming the laminar casting mold (14) according to any one of claims 1 to 5, wherein said aqueous medium (11) sprayed in said second step contains a curing agent or a curing accelerator which can cure said water-soluble binder.

7. The method of forming the laminar casting mold (14) according to any one of claims 1 to 5, wherein a curing agent or a curing accelerator which is not soluble in water is sprayed before or after spraying of said aqueous medium (11) in said second step.

8. The method of forming the laminar casting mold (14) according to any one of claims 1 to 7, wherein said part of the sand layer (7) over which said aqueous medium (11) has been sprayed is solidified or cured in said third step, by heating said part with a heat-generating element (13a), or by irradiating said part with an infrared ray or a laser beam.

9. The method of forming the laminar casting mold (14) according to any one of claims 1 to 8, wherein said third step is performed in an atmosphere of a gas selected from a heated air, a superheated steam, a carbon dioxide, an ester in the form of a gas, and an inert gas.

10. The method of forming the laminar casting mold (14) according to any one of claims 1 to 9, wherein a gas selected from an air, a heated air, a carbon dioxide, an ester in the form of a gas, and an inert gas is blown onto the sand layer (7) or passed therethrough, in said third step, simultaneously with or after heating of said part of the sand layer (7) over which said aqueous medium (11) has been sprayed.

11. The method of forming the laminar casting mold (14) according to any one of claims 1 to 10, wherein said third step comprises sucking a gas from a space in which said third step is performed, to exhaust the gas out of the space.

12. The method of forming the laminar casting mold (14) according to any one of claims 1 to 11, wherein said aqueous medium (11) has a temperature of 20-100°C.

13. The method of forming the laminar casting mold (14) according to any one of claims 1 to 12, wherein said aqueous medium (11) has a viscosity of 0.01-20 centipoise.

14. The method of forming the laminar casting mold (14) according to any one of claims 1 to 13, wherein said coated sand (3) is used in said first step after the coated sand (3) is preheated to a temperature not lower than 40°C.

15. The method of forming the laminar casting mold (14) according to any one of claims 1 to 14, wherein said coated sand (3) has fluidity at the room temperature, and a water content of the coated sand (3) is controlled so as to be not higher than 0.5% by mass.

16. The method of forming the laminar casting mold (14) according to any one of claims 1 to 15, wherein said thermosetting resin is an alkaline resol resin.

17. The method of forming the laminar casting mold (14) according to any one of claims 1 to 15, wherein said inorganic polymer is a water glass.


**Patentansprüche**

1. Verfahren zur Herstellung einer Laminargussform (14) als einstückigen Körper, der aus einer Vielzahl von Formschichten (12) besteht, die aus einem Formsand ausgebildet sind und die übereinander angeordnet sind, wobei jede der Vielzahl von Formschichten (12) durch Formschicht-bildende Schritte ausgebildet wird, die Folgendes umfassen:

einen ersten Schritt des Verteilens eines beschichteten Sands (3), der durch Beschichten eines hitzebeständigen Aggregats mit einem wasserlöslichen Bindemittel erhalten wurde und als der Formsand verwendet wird, zum Ausbilden einer dünnen Sandschicht (7) mit einer ebenen Oberfläche und einer vorbestimmten Dicke, wobei das wasserlösliche Bindemittel aus einem oder mehreren aus einem wärmehärtbaren Harz, einem Saccharid, einem synthetischen Polymer, einem Salz, einem Protein und einem anorganischen Polymer ausgewählt ist und eines oder mehrere aus dem wärmehärtbaren Harz und dem anorganischen Polymer umfasst;
einen zweiten Schritt des selektiven Aufsprühens eines wässrigen Mediums (11) unter Verwendung selektiver Sprühmittel (8; 10; 15) auf einen Teil der Sandschicht (7), wobei der Teil eine aus der Vielzahl von Formschichten (12) ergibt; und
einen dritten Schritt des Erhitzens des Teils der Sandschicht (7), auf den das wässrige Medium (11) aufgesprüht wurde, um den Teil zu verfestigen oder zu härten;
und wobei die Vielzahl von Formschichten (12) durch Wiederholen der Formschichtbildenden Schritte für eine erforderliche Anzahl von Malen nacheinander ausgebildet und übereinander angeordnet werden, wodurch die Laminargussform (14), die eine gewünschte dreidimensionale Konfiguration aufweist, in Form des aus der Vielzahl von übereinander angeordneten Formschichten (12) bestehenden einstückigen Körpers erhalten wird.

2. Verfahren zur Herstellung einer Laminargussform (14) nach Anspruch 1, wobei die selektiven Sprühmittel (8; 10; 15) eine Maske (8) umfassen, die mit einem Loch (9) versehen ist, das eine Form aufweist, die einer aus der Vielzahl von Formschichten (12) entspricht, und wobei der zweite Schritt das Anordnen der Maske (8) über der Sandschicht (7) und das Aufsprühen des wässrigen Mediums (11) aus einer Position oberhalb der Maske (8) umfasst.

3. Verfahren zur Herstellung einer Laminargussform (14) nach Anspruch 1, wobei die selektiven Sprühmittel (8; 10; 15) eine Tintenstrahlvorrichtung (15) sind und wobei der zweite Schritt das selektive Aufsprühen des wässrigen Mediums (11) aus der Tintenstrahlvorrichtung (15) durch ein Tintenstrahlverfahren nur auf den Teil der Sandschicht (7) umfasst, wodurch eine aus der Vielzahl von Formschichten (12) erhalten wird.

4. Verfahren zur Herstellung einer Laminargussform (14) nach einem der Ansprüche 1 bis 3, wobei im zweiten Schritt das wässrige Medium (11) in Form eines Nebels versprüht wird.

**5.** Verfahren zur Herstellung einer Laminargussform (14) nach einem der Ansprüche 1 bis 3, wobei im zweiten Schritt das wässrige Medium (11) in Form von Dampf oder überhitztem Dampf versprüht wird.

**6.** Verfahren zur Herstellung einer Laminargussform (14) nach einem der Ansprüche 1 bis 5, wobei das wässrige Medium (11), das im zweiten Schritt versprüht wird, einen Härter oder einen Härtungsbeschleuniger umfasst, der in der Lage ist, das wasserlösliche Bindemittel zu härten.

**7.** Verfahren zur Herstellung einer Laminargussform (14) nach einem der Ansprüche 1 bis 5, wobei in dem zweiten Schritt vor oder nach dem Aufsprühen des wässrigen Mediums (11) ein Härter oder ein Härtungsbeschleuniger aufgesprüht wird, der nicht wasserlöslich ist.

**8.** Verfahren zur Herstellung einer Laminargussform (14) nach einem der Ansprüche 1 bis 7, wobei jener Teil der Sandschicht (7), auf den das wässrige Medium (11) aufgesprüht wurde, im dritten Schritt durch Erhitzen des Teils mit einem wärmeerzeugenden Element (13a) oder durch Bestrahlen des Teils mit Infrarotstrahlen oder Laserstrahlen verfestigt oder gehärtet wird.

**9.** Verfahren zur Herstellung einer Laminargussform (14) nach einem der Ansprüche 1 bis 8, wobei der dritte Schritt unter einer Gasatmosphäre durchgeführt wird, die aus Heißluft, überhitztem Dampf, Kohlendioxid, einem gasförmigen Ester und einem Inertgas ausgewählt ist.

**10.** Verfahren zur Herstellung einer Laminargussform (14) nach einem der Ansprüche 1 bis 9, wobei im dritten Schritt gleichzeitig mit oder nach dem Erhitzen des Teils der Sandschicht (7), auf den das wässrige Medium (11) aufgesprüht wurde, ein Gas, das aus Luft, Heißluft, Kohlendioxid, einem gasförmigen Ester und einem Inertgas ausgewählt ist, auf die Sandschicht (7) aufgeblasen oder durch diese hindurchgeleitet wird.

**11.** Verfahren zur Herstellung einer Laminargussform (14) nach einem der Ansprüche 1 bis 10, wobei der dritte Schritt das Absaugen von Gas aus dem Raum, in dem der dritte Schritt durchgeführt wird, zum Abführen des Gases aus dem Raum umfasst.

**12.** Verfahren zur Herstellung einer Laminargussform (14) nach einem der Ansprüche 1 bis 11, wobei das wässrige Medium (11) eine Temperatur von 20 °C bis 100 °C aufweist.

**13.** Verfahren zur Herstellung einer Laminargussform (14) nach einem der Ansprüche 1 bis 12, wobei das wässrige Medium (11) eine Viskosität von 0,01 bis 20 cP aufweist.

**14.** Verfahren zur Herstellung einer Laminargussform (14) nach einem der Ansprüche 1 bis 13, wobei der beschichtete Sand (3) im ersten Schritt eingesetzt wird, nachdem der beschichtete Sand (3) auf eine Temperatur von nicht weniger als 40 °C vorerhitzt wurde.

**15.** Verfahren zur Herstellung einer Laminargussform (14) nach einem der Ansprüche 1 bis 14, wobei der beschichtete Sand (3) bei Raumtemperatur Fließvermögen aufweist und der Wassergehalt des beschichteten Sands (3) so gesteuert wird, dass er nicht höher ist als 0,5 Massen-%.

**16.** Verfahren zur Herstellung einer Laminargussform (14) nach einem der Ansprüche 1 bis 15, wobei das wärmehärtbare Harz ein alkalisches Resolharz ist.

**17.** Verfahren zur Herstellung einer Laminargussform (14) nach einem der Ansprüche 1 bis 15, wobei das anorganische Polymer Wasserglas ist.

## Revendications

**1.** Procédé de formation d'un moule de coulée laminaire (14) sous la forme d'un corps monobloc constitué d'une pluralité de couches de moule (12) qui sont formées d'un sable de moulage, et qui sont superposées les unes sur les autres, dans lequel chacune de la pluralité de couches de moule (12) est formée par des étapes de formation de couche de moule comprenant :

une première étape d'étalement d'un sable revêtu (3) qui est obtenu en enduisant un agrégat réfractaire avec un liant hydrosoluble et utilisé comme sable de moulage, pour former une couche de sable mince (7) ayant une surface plane et une épaisseur prédéterminée, dans lequel le liant hydrosoluble est choisi parmi un ou plusieurs parmi une résine thermodurcissable, un saccharide, un polymère synthétique, un sel, une protéine et un polymère inorganique, et comprend un ou plusieurs parmi la résine thermodurcissable et le polymère inorganique ;
une deuxième étape de pulvérisation d'un milieu aqueux (11) en utilisant des moyens de pulvérisation sélective (8, 10 ; 15), de manière sélective sur une partie de la couche de sable (7), laquelle partie donne une certaine de la pluralité de couches de moule (12) ; et
une troisième étape de chauffage de ladite partie de la couche de sable (7) sur laquelle le milieu aqueux (11) a été pulvérisé, pour solidifier ou durcir ladite partie,
et dans lequel la pluralité de couches de moule (12) sont successivement formées et superposées les unes sur les autres en répétant lesdites étapes de formation de couche de moule un nombre de fois requis, moyennant quoi le moule de coulée laminaire (14) ayant une configuration tridimensionnelle prévue est obtenu sous la forme du corps monobloc constitué de la pluralité de couches de moule (12) superposées les unes sur les autres.

2. Procédé de formation du moule de coulée laminaire (14) selon la revendication 1, dans lequel lesdits moyens de pulvérisation sélective (8, 10 ; 15) comprennent un masque (8) pourvu d'un trou (9) ayant une forme correspondant à l'un de ladite pluralité de couches de moule (12), et ladite deuxième étape comprend une disposition dudit masque (8) au-dessus de ladite couche de sable (7), et une pulvérisation dudit milieu aqueux (11) à partir d'une position au-dessus du masque (8).

3. Procédé de formation du moule de coulée laminaire (14) selon la revendication 1, dans lequel lesdits moyens de pulvérisation sélective (8, 10 ; 15) sont un dispositif à jet d'encre (15), et ladite deuxième étape comprend une pulvérisation dudit milieu aqueux (11) à partir du dispositif à jet d'encre (15) par un processus à jet d'encre, de manière sélective uniquement sur ladite partie de la couche de sable (7) donnant ladite certaine de la pluralité de couches de moule (12).

4. Procédé de formation du moule de coulée laminaire (14) selon l'une quelconque des revendications 1 à 3, dans lequel ledit milieu aqueux (11) est pulvérisé sous la forme d'un brouillard dans ladite deuxième étape.

5. Procédé de formation du moule de coulée laminaire (14) selon l'une quelconque des revendications 1 à 3, dans lequel ledit milieu aqueux (11) est pulvérisé sous la forme d'une vapeur ou d'une vapeur surchauffée dans ladite deuxième étape.

6. Procédé de formation du moule de coulée laminaire (14) selon l'une quelconque des revendications 1 à 5, dans lequel ledit milieu aqueux (11) pulvérisé dans ladite deuxième étape contient un agent de durcissement ou un accélérateur de durcissement qui peut durcir ledit liant hydrosoluble.

7. Procédé de formation du moule de coulée laminaire (14) selon l'une quelconque des revendications 1 à 5, dans lequel un agent de durcissement ou un accélérateur de durcissement qui n'est pas hydrosoluble est pulvérisé avant ou après la pulvérisation dudit milieu aqueux (11) dans ladite deuxième étape.

8. Procédé de formation du moule de coulée laminaire (14) selon l'une quelconque des revendications 1 à 7, dans lequel ladite partie de la couche de sable (7) sur laquelle ledit milieu aqueux (11) a été pulvérisé est solidifiée ou durcie dans ladite troisième étape, en chauffant ladite partie avec un élément générateur de chaleur (13a), ou en irradiant ladite partie avec un rayon infrarouge ou un faisceau laser.

9. Procédé de formation du moule de coulée laminaire (14) selon l'une quelconque des revendications 1 à 8, dans lequel ladite troisième étape est réalisée dans une atmosphère d'un gaz choisi parmi un air chauffé, une vapeur surchauffée, un dioxyde de carbone, un ester sous la forme d'un gaz et un gaz inerte.

10. Procédé de formation du moule de coulée laminaire (14) selon l'une quelconque des revendications 1 à 9, dans lequel un gaz choisi parmi un air, un air chauffé, un dioxyde de carbone, un ester sous la forme d'un gaz et un gaz inerte est soufflé jusque sur la couche de sable (7) ou passé à travers celle-ci, dans ladite troisième étape, en même temps que ou après le chauffage de ladite partie de la couche de sable (7) sur laquelle ledit milieu aqueux (11) a été pulvérisé.

11. Procédé de formation du moule de coulée laminaire (14) selon l'une quelconque des revendications 1 à 10, dans lequel ladite troisième étape comprend l'aspiration d'un gaz à partir d'un espace dans lequel ladite troisième étape est effectuée, pour évacuer le gaz hors de l'espace.

12. Procédé de formation du moule de coulée laminaire (14) selon l'une quelconque des revendications 1 à 11, dans lequel ledit milieu aqueux (11) a une température de 20 à 100°C.

13. Procédé de formation du moule de coulée laminaire (14) selon l'une quelconque des revendications 1 à 12, dans lequel ledit milieu aqueux (11) a une viscosité de 0,01 à 20 centipoises.

14. Procédé de formation du moule de coulée laminaire (14) selon l'une quelconque des revendications 1 à 13, dans lequel ledit sable revêtu (3) est utilisé dans ladite première étape après que le sable revêtu (3) a été préchauffé à une température non inférieure à 40°C.

15. Procédé de formation du moule de coulée laminaire (14) selon l'une quelconque des revendications 1 à 14, dans lequel ledit sable revêtu (3) a une fluidité à la température ambiante, et une teneur en eau du sable revêtu (3) est commandée de manière à ne pas dépasser 0,5 % en masse.

16. Procédé de formation du moule de coulée laminaire (14) selon l'une quelconque des revendications 1 à 15, dans lequel ladite résine thermodurcissable est une résine de résol alcaline.

17. Procédé de formation du moule de coulée laminaire (14) selon l'une quelconque des revendications 1 à 15, dans lequel ledit polymère inorganique est un verre soluble.

# FIG. 1

(a)

(b)

# FIG. 2

# FIG. 3

FIG. 4

# FIG. 5

# FIG. 6

FIG. 7

# FIG. 8

Sand scattering device

Cylinder

Laser irradiation device

Mask moving device

Light shielding mask

Sand layer lift

Mask recovery table

Mask holding table

# FIG. 9

Binder spray nozzle

Hole of the mask

Mask

Sand

Sand layer lift

Base plate

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 9168840 A
- JP 9141386 A
- WO 2004112988 A2
- WO 0226419 A1